# EUROPEAN PATENT SPECIFICATION

(11) **EP 4 026 652 B1**
(45) Date of publication and mention of the grant of the patent: **09.12.2026**
(21) Application number: 20879814.0
(22) Date of filing: 21.10.2020
(51) Int. Cl.: B23K 35/30, B23K 35/02, B23K 35/38, B23K 35/40, C22C 38/42, C22C 38/50, C22C 38/02, C22C 38/04, C22C 38/00

(54) **WIRE ROD FOR GAS PROTECTION WELDING WIRE, AND WELDING WIRE**
DRAHTSTAB FÜR GASSCHUTZSCHWEISSDRAHT UND SCHWEISSDRAHT
TIGE DE FIL POUR FIL DE SOUDAGE DE PROTECTION CONTRE LES GAZ, ET FIL DE SOUDAGE

(30) Priority: 21.10.2019 CN 201910998451
(43) Date of publication of application: 13.07.2022
(73) Proprietor: BAOSHAN IRON & STEEL CO., LTD., Shanghai 201900 (CN)
(72) Inventor: QU, Zhaoxia, Shanghai 201900 (CN); XIA, Liqian, Shanghai 201900 (CN); WANG, Baosen, Shanghai 201900 (CN)
(74) Representative: Maiwald GmbH
(86) International application number: PCT/CN2020/122395
(87) International publication number: WO 2021/078136

(56) References cited:
- CN-A- 1 611 321
- CN-A- 102 658 440
- CN-A- 102 658 440
- CN-A- 102 756 219
- CN-A- 102 756 219
- CN-A- 104 741 822
- CN-A- 105 234 584
- CN-A- 105 397 332
- CN-A- 106 216 877
- CN-A- 106 216 877
- CN-A- 108 857 137
- JP-A- 2002 336 989
- JP-A- 2004 261 858
- JP-A- H03 221 294

## Description

### TECHNICAL FIELD

The present invention relates to a wire rod for welding wire and a welding wire, in particular to a wire rod for gas shielded welding wire and a welding wire.

### BACKGROUND ART

The earliest ordinary commercial weather-resistant steels can be divided into: Corten A series which has high P and Cu contents with addition of Cr and Ni, and Corten B series based on Cr-Mn alloying. The first generation of weather-resistant steel for railway vehicles is mainly Corten A. The second generation of weather-resistant steel for railway vehicles is mainly high-strength weather-resistant steel based on Cu-Cr-Ni alloy without P. The weather resistance of these two steels is comparable. However, neither of these two weather-resistant steels can meet the requirements for railway vehicles on long service life.

Therefore, the third generation of weather-resistant steel for railway vehicles, such as steel S350EW and S450EW, with high corrosion resistance is further developed in the prior art. According to the corrosion test results, railway wagons made of EW series steels have significantly better corrosion resistance than those made of ordinary weather-resistant steels and high-strength weather-resistant steels.

Therefore, welding wires suitable for the base materials of weather-resistant steels are desired, and the comprehensive mechanical properties and weather resistance of the welding wires should be matched with those of the base materials.

Some prior art has been disclosed. For example, CN102756219A (published on October 31, 2012, "Welding Wire, Wire Rod and Use Thereof") discloses a wire rod and a welding wire. The subject matter of this disclosure aims to solve the technical problem of providing a gas shielded welding wire that is matched to the steel S450EW, whereby the deposited metal formed from the welding wire has a tensile strength of not less than 650 MPa.

CN105234584A A discloses a gas-shielded solid wire for high-corrosion-resistant weathering steel, which provides good corrosion resistance, moderate strength of the deposited metal, good low-temperature impact toughness of the weld, good weld bead formation, low spatter and excellent welding process performance.

However, the existing welding wires are not suitable for the steel S350EW. Therefore, it is desirable to obtain a welding material as follows: the comprehensive mechanical properties and corrosion resistance of the deposited metal formed from the welding material are comparable to those of the base material S350EW; and it not only has a weather resistance comparable to that of the base material S350EW, but also has mechanical properties comparable to those of the base material S350EW (i.e., the mechanical properties being at an ordinary level of 50 kg). Meanwhile, the welding material has a good welding performance and a wide enough adaptive window for welding process.

### SUMMARY

One objective of the present disclosure is to provide a wire rod for gas shielded welding wire with high weather resistance and low strength. The comprehensive mechanical properties and corrosion resistance of the deposited metal, after the welding wire made of the wire rod for gas shielded welding wire is welded, are comparable to those of S350EW (i.e., the welding base material). Moreover, the welding wire has a wide range of processing properties, which can be used for both hot-rolled and cold-rolled sheets.

The invention is defined in the appended claims.

In order to achieve the above-mentioned objective, the present invention provides a wire rod for gas shielded welding wire with high weather resistance and low strength, as defined in the claims.

In the technical solution disclosed herein, the wire rod for gas shielded welding wire is used in as-welded condition. In order to achieve good corrosion resistance and comprehensive mechanical properties, the present inventors have designed the composition of the wire rod, and the design principles of each chemical element are as follows.

C: in the wire rod for gas shielded welding wire with high weather resistance and low strength as described herein, the increase of C content will increase the strength, decrease the elongation, and deteriorate the shaping and cold deformation properties, which is unfavorable for the drawing property of the wire rod for welding wire. Therefore, the content of C in mass percentage is controlled to be ≤ 0.03% in the technical solution disclosed herein.

Mn: in the wire rod for gas shielded welding wire with high weather resistance and low strength as described herein, Mn is used as a deoxidizing element. If the content of Mn is too high, the ductility and toughness will be deteriorated while the strength of weld metal is increased. Therefore, the content of Mn in mass percentage is controlled to be 0.20-0.70% in the technical solution disclosed herein.

Si: in the wire rod for gas shielded welding wire with high weather resistance and low strength as described herein, Si is used as a deoxidizing element. If the content of Si is too high, it will increase the strength through solid solution strengthening, and affect the toughness of the deposited metal. If the content of Si is too low, the combined deoxidization of Si and Mn is too weak to achieve the deoxidizing effect. Therefore, the content of Si in mass percentage is controlled to be 0.20-0.60% in the technical solution disclosed herein.

Ni: in the wire rod for gas shielded welding wire with high weather resistance and low strength as described herein, Ni is one of the main weather-resistant elements. Ni can promote the transformation of austenite to acicular ferrite, while reducing the austenite-to- ferrite phase transformation temperature to suppress the formation of eutectoid ferrite. In addition, in order to avoid brittle structures generated by Cr, a certain amount of Ni is required to be added for balance. With the increase of Ni content in the weld metal, the low-temperature toughness of the weld metal tends to be stable. However, if the content of Ni is too high, the deposited metal will reach a structure of 100% bainite, resulting in the strength level being higher than desired, which does not match with the base material. Therefore, the content of Ni in mass percentage is controlled to be 1.6-2.7% in the technical solution disclosed herein.

Cr: in the wire rod for gas shielded welding wire with high weather resistance and low strength as described herein, Cr is one of the main weather-resistant elements. In order to ensure the weather resistance of the material, it is necessary to add a certain amount of Cr. However, if the content of Cr is too high, the possibility of brittle phase generation will increase. Therefore, the content of Cr in mass percentage is controlled to be 1.60-2.20% in the technical solution disclosed herein.

Cu: in the wire rod for gas shielded welding wire with high weather resistance and low strength as described herein, Cu is one of the main weather-resistant elements. In order to ensure the combined corrosion resistance effect of Cr, Ni and Cu, it is necessary to add a certain amount of Cu. However, if the content of Cu is too high, the cracking tendency of the material will be increased. Therefore, the content of Cu in mass percentage is controlled to be 0.15-0.35% in the technical solution disclosed herein.

Ti: in the wire rod for gas shielded welding wire with high weather resistance and low strength as described herein, Ti mainly plays the role of deoxidization and denitrification in the weld metal. In addition, Ti combines with O₂ in the welding pool to form TiO, which provides a nucleation basis for the acicular ferrite during solid-state phase transformation. Meanwhile, Ti is a strong carbonitride-forming element, and their fine precipitates can refine the structure and improve the toughness and ductility of the weld metal. A certain amount of Ti can significantly improve the welding performance of the welding wire and reduce splashing. However, if the content of Ti is too high, it will greatly increase the strength of the weld metal, reduce its elongation and increase the viscosity of the welding pool. Therefore, the content of Ti in mass percentage is controlled to be 0.01-0.07% in the technical solution disclosed herein.

Preferably, in the wire rod for gas shielded welding wire according to the present invention, the content of Ni is 1.8-2.2%.

Preferably, in the wire rod for gas shielded welding wire according to the present invention, the content of Si is 0.30-0.50%.

Preferably, in the wire rod for gas shielded welding wire according to the present invention, the content of Mn is 0.35-0.70%.

Preferably, in the wire rod for gas shielded welding wire according to the present invention, the content of Ti is 0.04-0.07%.

In the wire rod for gas shielded welding wire according to the present invention, the inevitable impurities include: P≤0.015%, and S≤0.015%.

For the above technical solutions, when the content of impurity elements becomes lower, the steel will become purer and the toughness of the steel will become better. Despite this, the cost of steelmaking needs to be taken into consideration. Therefore, the contents of P and S in mass percentage are controlled to be: P≤0.015%, and S≤0.015%

The wire rod for gas shielded welding wire according to the present invention may further comprise rare earth element(s) in a total content of ≤ 0.1% by mass. For example, the rare earth element(s) can be cerium (Ce) and/or yttrium (Y), the total content of which is ≤ 0.1% by mass. The rare earth element(s) is (are) prone to react with other elements, and can play the role of grain refinement, deoxidization and desulfurization, thereby improving the structure of the weld.

Preferably, in the wire rod for gas shielded welding wire according to the present invention, a deposited metal formed from the welding wire has a microstructure of ferrite + bainite.

Preferably, in the wire rod for gas shielded welding wire according to the present invention, the ferrite of the deposited metal formed from the welding wire has a phase ratio of 40% to 80%.

Preferably, in the wire rod for gas shielded welding wire according to the present invention, the deposited metal formed from the welding wire has a tensile strength of < 650 MPa and a weather resistance index I of ≥ 10.

It should be noted that in the wire rod for gas shielded welding wire with high weather resistance and low strength as described herein, the level of the weather resistance is expressed by the following formula for the weather resistance index I:$I = 26.01 Cu + 3.88 Ni + 1.20 Cr + 1.49 Si + 17.28 P - 7.29 Cu \times Ni - 9.10 Ni \times P - 33.39 Cu 2 ,$ wherein Cu, Ni, Cr, Si and P each represent the content of the corresponding elements in mass percentage, and refer to the numerical value before the symbol "%" when assigned into the formula. For example, for a Cu content of 0.35%, when assigned into the formula, the corresponding numerical value assignment should be 0.35. Ordinary low-alloy weather-resistant steels generally have a weather resistance I of ≥ 6, while the wire rod for gas shielded welding wire with high weather resistance and low strength as described herein has a weather resistance I of ≥ 10.

Moreover, generally speaking, the higher the weather resistance of a material is, the higher the tensile strength of the material will be. Therefore, the present inventors are faced with the following difficulties and key points: while ensuring a high weather resistance, it is further desired to achieve that the deposited metal obtained by the gas shielded welding wire has a tensile strength of < 650MPa, and has good low temperature impact toughness and weldability. Based on this, the present inventors have designed the elemental composition within the above ranges, such that: on the premise of ensuring a high weather resistance, the structure with the desired phase ratio is obtained in the deposited metal by adjusting the alloy composition, which can ensure that the tensile strength of the joint is not too high.

Correspondingly, another objective of the present invention is to provide a gas shielded welding wire which is suitable for the welding of high-weather-resistant structural steel (e.g., S350EW steel) with mechanical properties being at the ordinary level of 50 kg, and is particularly suitable for welding production and manufacturing of structures such as novel railway carriages, containers and engineering machinery.

In order to the achieve the above-mentioned objective, the present invention provides a gas shielded welding wire with high weather resistance and low strength, which is made of the above-described wire rod for gas shielded welding wire.

It should be noted that when the gas shielded welding wire according to the present invention is used for welding, the welding gas used can be a binary gas mixture of argon and carbon dioxide, or a binary gas mixture of argon and oxygen. Preferably, the binary gas mixture of argon and carbon dioxide may consist of 82% Ar and 18% CO₂, or 90% Ar and 10% CO₂; and the binary gas mixture of argon and oxygen may consist of 98% Ar and 2% O₂.

The wire rod for gas shielded welding wire with high weather resistance and low strength and the welding wire according to the present invention have exhibited the following advantages and beneficial effects:
The comprehensive mechanical properties and corrosion resistance of the deposited metal, after the gas shielded welding wire with high weather resistance and low strength according to the present invention is welded, are comparable to those of S350EW (i.e., the welding base material). Moreover, the gas shielded welding wire has a wide range of process parameter adaptability, which can be used for the welding processes of both hot-rolled and cold-rolled sheets with specified thickness ranges.

### DETAILED DESCRIPTION

The wire rod for gas shielded welding wire with high weather resistance and low strength and the welding wire according to the present invention will be further explained and illustrated below in conjunction with the specific embodiments. However, the technical solution of the present invention is not limited to the explanation and illustration.

### Examples 1 to 5 and Comparative Examples 1 to 3

The gas shielded welding wires in Examples 1 to 5 and Comparative Examples 1 to 3 were produced by the following steps:
(1) obtaining a steel ingot by continuous casting or die casting after smelting, wherein the obtained steel ingot had the composition as shown in Table 1;
(2) rolling the steel ingot to obtain a wire rod with ϕ5.5 mm; and
(3) subjecting the wire rod to rough drawing, intermediate annealing, finishing drawing and copper plating to finally obtain a welding wire with ϕ1.0 mm or ϕ1.2 mm.

The content of each chemical element smelted for obtaining the welding wires of Examples 1 to 5 and Comparative Examples 1 to 3 was listed in Table 1 (in mass percentage).

**Table 1 (%, the balance being Fe and other inevitable impurities except for P and S)**

| No. | | C | Si | Mn | Cr | Ni | Cu | Ti | S | P | Weather resistance index I |
|---|---|---|---|---|---|---|---|---|---|---|---|
| Ex. | 1 | 0.02 | 0.20 | 0.2 | 2.2 | 1.6 | 0.35 | 0.07 | 0.003 | 0.011 | 10.11 |
| | 2 | 0.03 | 0.60 | 0.7 | 1.6 | 2.2 | 0.20 | 0.04 | 0.002 | 0.013 | 11.97 |
| | 3 | 0.02 | 0.35 | 0.5 | 1.8 | 2.7 | 0.15 | 0.03 | 0.005 | 0.005 | 13.32 |
| | 4 | 0.03 | 0.46 | 0.6 | 2.0 | 2.0 | 0.25 | 0.06 | 0.010 | 0.015 | 11.60 |
| | 5 | 0.01 | 0.50 | 0.4 | 1.8 | 1.8 | 0.20 | 0.01 | 0.015 | 0.015 | 11.14 |
| Com. Ex. | 1 | ***0.04*** | 0.38 | ***1.0*** | ***0.4*** | ***0.4*** | ***0.50*** | 0.01 | 0.008 | ***0.030*** | 6.21 |
| | 2 | 0.03 | 0.50 | ***1.4*** | ***0.6*** | ***0**.**5*** | 0.20 | 0.01 | 0.002 | 0.015 | 6.73 |
| | 3 | ***0.06*** | 0.55 | ***1.3*** | ***0.5*** | ***0.4*** | 0.18 | 0.05 | 0.003 | 0.010 | 6.18 |

| | | | | | | | | | | | |
|---|---|---|---|---|---|---|---|---|---|---|---|
| Note: In the table, weather resistance index I = 26.01Cu + 3.88Ni + 1.20Cr + 1.49Si + 17.28P - 7.29Cu × Ni - 9.10Ni × P - 33.39Cu². | | | | | | | | | | | |

The deposited metal test of the argon-rich gas shielded welding wire was carried out by using a plate thickness of 20 mm, a groove form of 60° single-sided V-shaped butt, and a bottom surface gap of 12 mm, all of which were completed with a 1.2 mm diameter welding wire. The gas consisted of 90% Ar and 10% CO₂. No preheating was performed before welding. The interlayer temperature was controlled at 150 °C. During welding, the gas shielded welding wire in each example had stable arc, good spreadability, very little spatter and good weld appearance, which could be used for all-position welding. Subsequently, tensile and impact tests were carried out on the deposited metals formed by the gas shielded welding wires of Examples 1 to 5 and Comparative Examples 1 to 3, wherein the tests were conducted in accordance with the standard GB/T 8110, "Welding electrodes and rods for gas shielded arc welding of carbon and low alloy steel*".* For tensile and impact tests, the specimens were processed and tested in accordance with Sections 5.4.4 and 5.4.5, respectively. The results were listed in Table 2.

**Table 2**

| No. | | Yield strength Rₑₗ | Tensile strength Rₘ | Elongation A | Impact energy at -40°C |
|---|---|---|---|---|---|
| | | (MPa) | (MPa) | (%) | Aₖᵥ* (J) |
| Ex. | 1 | 380 | 565 | 24 | 69 |
| | 2 | 465 | 580 | 22 | 87 |
| | 3 | 420 | 560 | 23 | 70 |
| | 4 | 390 | 590 | 21 | 71 |
| | 5 | 355 | 550 | 22 | 61 |
| Com. Ex. | 1 | 422 | 503 | 28 | 72 |
| | 2 | 513 | 588 | 26 | 86 |
| | 3 | 500 | 592 | 25 | 90 |

| | | | | | |
|---|---|---|---|---|---|
| Note: The value of impact energy Aₖᵥ* at -40°C was obtained by averaging the impact energy values of five replicates in the CVN test. | | | | | |

It can be seen from Table 2 that the deposited metal formed by the gas shielded welding wire in each Example had a tensile strength of lower than 650 MPa. Moreover, it can be seen in combination with Table 1 that each Example had a weather resistance index I of ≥ 10.

The corrosion tests were conducted on the deposited metals formed by the gas shielded welding wires in above-described Examples 1 to 5 in accordance with the standard TB/T2375, "*Test method for cyclic immersion corrosion of weather-resistant steel for railway*". The high-weather-resistant steel S350EW, a novel railway carriage material, was used as a comparative specimen for the deposited metal test plates. The corrosion test was carried out for 72 h. The test results were listed in Table 3.

**Table 3**

| No. | | Corrosion weight loss (g/m²) | Corrosion weight loss rate (g/m²/h) | Relative corrosion rate (%) |
|---|---|---|---|---|
| Ex. | 1 | 73 | 1.01 | 0 |
| | 2 | 72 | 1.00 | 1 |
| | 3 | 72 | 1.00 | 1 |
| | 4 | 75 | 1.04 | 3 |
| | 5 | 76 | 1.06 | 4 |
| Com. Ex. | 1 | 108 | 1.50 | 48 |
| | 2 | 103 | 1.43 | 42 |
| | 3 | 112 | 1.56 | 53 |
| Base material S350EW | | 73 | 1.01 | / |

| | | | | |
|---|---|---|---|---|
| Note: Relative corrosion rate = \|corrosion weight loss of base material - corrosion weight loss of deposited metal\| / corrosion weight loss of the base material × 100%. | | | | |

It can be seen from Table 2 and Table 3 that the comprehensive mechanical properties and corrosion resistance of the deposited metal in each Example, after the gas shielded welding wire was welded, were comparable to those of S350EW (i.e., the welding base material). Moreover, the inventive welding wire had a wide range of processing properties, which could be used for both hot-rolled and cold-rolled sheets.

Moreover, the deposited metals finally formed by the gas shielded welding wires and wire rods of Examples 1-5 according to the present invention were sampled, and their metallographic structure was observed. It was found that the deposited metal in each Example had a microstructure of ferrite + bainite, wherein the ferrite had a phase ratio of 40% to 80%. In conclusion, it can be seen from the above that the comprehensive mechanical properties and corrosion resistance of the deposited metal, after the gas shielded welding wire with high weather resistance and low strength according to the present disclosure was welded, were comparable to those of S350EW (i.e., the welding base material). Moreover, the inventive welding wire had a wide range of processing properties, which could be used for both hot-rolled and cold-rolled sheets.

All the technical features described in the present invention can be freely combined or combined in any way unless there is a contradiction between them and that the resulting combination falls within the scope of the claims.

## Claims

1. A wire rod for gas shielded welding wire, comprising the following chemical elements in mass percentage:
C≤0.03%,
Mn: 0.20-0.70%,
Si: 0.20-0.60%,
Ni: 1.6-2.7%,
Cr: 1.60-2.20%,
Cu: 0.15-0.35%,
Ti: 0.01-0.07%,
rare earth elements ≤ 0.1% in total and
the balance being Fe and inevitable impurities, wherein P ≤ 0.015% and S ≤ 0.015%.

2. The wire rod for gas shielded welding wire as claimed in claim 1, wherein the content of Ni is 1.8-2.2%.

3. The wire rod for gas shielded welding wire as claimed in claim 1, wherein the content of Si is 0.30-0.50%.

4. The wire rod for gas shielded welding wire as claimed in claim 1, wherein the content of Mn is 0.35-0.70%.

5. The wire rod for gas shielded welding wire as claimed in claim 1, wherein the content of Ti is 0.04-0.07%.

6. The wire rod for gas shielded welding wire as claimed in claim 1, wherein a deposited metal formed from the welding wire has a microstructure of ferrite + bainite.

7. The wire rod for gas shielded welding wire as claimed in claim 6, wherein the ferrite of the deposited metal has a phase ratio of 40% to 80%.

8. The wire rod for gas shielded welding wire as claimed in any one of claims 1 to 7, wherein a deposited metal formed from the welding wire has a tensile strength of < 650 MPa measured according to GB/T 8110 and a weather resistance index I of ≥ 10, and wherein I = 26.01Cu + 3.88Ni + 1.20Cr + 1.49Si + 17.28P - 7.29Cu × Ni - 9.10Ni × P - 33.39Cu², where Cu, Ni, Cr, Si and P each represent the content of the corresponding element in mass percentage and refer to the numerical value before the symbol %.

9. A gas shielded welding wire made of the wire rod for gas shielded welding wire as claimed in any one of claims 1 to 8.

## Patentansprüche

1. Walzdraht für Schutzgasschweißdraht, umfassend die folgenden chemischen Elemente in Massenprozent:
C≤0,03 %,
Mn: 0,20-0,70 %,
Si: 0,20-0,60 %,
Ni: 1,6-2,7 %,
Cr: 1,60-2,20 %,
Cu: 0,15-0,35 %,
Ti: 0,01-0,07 %,
Seltenerdelemente insgesamt ≤ 0,1 % und
Rest Fe und unvermeidbare Verunreinigungen, wobei P ≤ 0,015 % und S ≤ 0,015 %.

2. Walzdraht für Schutzgasschweißdraht nach Anspruch 1, wobei der Gehalt an Ni 1,8-2,2 % beträgt.

3. Walzdraht für Schutzgasschweißdraht nach Anspruch 1, wobei der Gehalt an Si 0,30-0,50 % beträgt.

4. Walzdraht für Schutzgasschweißdraht nach Anspruch 1, wobei der Gehalt an Mn 0,35-0,70 % beträgt.

5. Walzdraht für Schutzgasschweißdraht nach Anspruch 1, wobei der Gehalt an Ti 0,04-0,07 % beträgt.

6. Walzdraht für Schutzgasschweißdraht nach Anspruch 1, wobei ein aus dem Schweißdraht gebildetes abgelagertes Metall ein Mikrogefüge aus Ferrit + Bainit aufweist.

7. Walzdraht für Schutzgasschweißdraht nach Anspruch 6, wobei der Ferrit des abgelagerten Metalls einen Phasenanteil von 40 % bis 80 % aufweist.

8. Walzdraht für Schutzgasschweißdraht nach einem der Ansprüche 1 bis 7, wobei ein aus dem Schweißdraht gebildetes abgelagertes Metall eine gemäß GB/T 8110 gemessene Zugfestigkeit von < 650 MPa und einen Witterungsbeständigkeitsindex I von ≥ 10 aufweist, und wobei I = 26,01Cu + 3,88Ni + 1,20Cr + 1,49Si + 17,28P - 7,29Cu × Ni - 9,10Ni × P - 33,39Cu², wobei Cu, Ni, Cr, Si und P jeweils den Gehalt des entsprechenden Elements in Massenprozent darstellen und sich auf den Zahlenwert vor dem Symbol % beziehen.

9. Schutzgasschweißdraht, hergestellt aus dem Walzdraht für Schutzgasschweißdraht nach einem der Ansprüche 1 bis 8.

## Revendications

1. Tige de fil pour fil de soudage sous protection gazeuse, comprenant les éléments chimiques suivants en pourcentage en masse :
C≤0,03 %,
Mn : 0,20-0,70 %,
Si : 0,20-0,60 %
Ni : 1,6-2,7 %,
Cr : 1,60-2,20 %,
Cu : 0,15-0,35 %,
Ti : 0,01-0,07 %,
éléments de terres rares ≤ 0,1 % au total et le reste étant Fe et des impuretés inévitables, dans laquelle P ≤ 0,015 % et S ≤ 0,015 %.

2. Tige de fil pour fil de soudage sous protection gazeuse selon la revendication 1, dans laquelle la teneur en Ni est de 1,8-2,2 %.

3. Tige de fil pour fil de soudage sous protection gazeuse selon la revendication 1, dans laquelle la teneur en Si est de 0,30-0,50 %.

4. Tige de fil pour fil de soudage sous protection gazeuse selon la revendication 1, dans laquelle la teneur en Mn est de 0,35-0,70 %.

5. Tige de fil pour fil de soudage sous protection gazeuse selon la revendication 1, dans laquelle la teneur en Ti est de 0,04-0,07 %.

6. Tige de fil pour fil de soudage sous protection gazeuse selon la revendication 1, dans laquelle un métal déposé formé à partir du fil de soudage présente une microstructure de ferrite + bainite.

7. Tige de fil pour fil de soudage sous protection gazeuse selon la revendication 6, dans laquelle la ferrite du métal déposé présente un rapport de phase de 40 % à 80 %.

8. Tige de fil pour fil de soudage sous protection gazeuse selon l'une quelconque des revendications 1 à 7, dans laquelle un métal déposé formé à partir du fil de soudage présente une résistance à la traction < 650 MPa mesurée selon GB/T 8110 et un indice de résistance aux intempéries I ≥ 10, et dans laquelle I = 26,01Cu + 3,88Ni + 1,20Cr + 1,49Si + 17,28P - 7,29Cu x Ni -9,10Ni x P - 33,39Cu², où Cu, Ni, Cr, Si et P représentent chacun la teneur de l'élément correspondant en pourcentage en masse et se réfèrent à la valeur numérique avant le symbole %.

9. Fil de soudage sous protection gazeuse fabriqué à partir de la tige métallique pour fil de soudage sous protection gazeuse selon l'une des revendications 1 à 8.
